# EUROPÄISCHE PATENTSCHRIFT

(11) **EP 0 718 349 B1**
(45) Veröffentlichungstag und Bekanntmachung des Hinweises auf die Patenterteilung: **27.10.1999**
(21) Anmeldenummer: 95119814.2
(22) Anmeldetag: 15.12.1995
(51) Int. Cl.: C08J 11/24

(54) **Verfahren zur Herstellung von Recyclatpolyolen**
Process for preparing recycled polyols
Procédé de préparation de polyols de recyclage

(30) Priorität: 22.12.1994 DE 4445890
(43) Veröffentlichungstag der Anmeldung: 26.06.1996
(73) Patentinhaber: BASF Schwarzheide GmbH, 01986 Schwarzheide (DE)
(72) Erfinder: Naber, Bernhard, D-01987 Schwarzheide (DE); Lezius, Maritta, D-01987 Schwarzheide (DE)
(74) Vertreter: Karg, Jochen

(56) Entgegenhaltungen:
- EP-A- 0 592 952
- DE-A- 4 215 014

## Beschreibung

Die Erfindung betrifft ein Verfahren zur Herstellung von Recyclatpolyolen durch Glykolyse von Polyurethan-Hartschaumstoffen.

Polyurethane sind vielseitig verwendbare Kunststoffe, die in großen Mengen hergestellt werden. Große Bedeutung haben hierbei die Polyurethan-Hartschäume (im folgenden als "PUR-HS" bezeichnet). Aufgrund ihrer guten Wärmedämmung werden sie häufig zur Temperaturisolierung eingesetzt, beispielsweise im Bauwesen oder im Bereich der Kühlmöbelindustrie. Ein Problem bei der Verwendung von PUR-HS besteht darin, daß sie aufgrund ihrer Vernetzung nur auf chemischem Wege recycelt werden können.

So ist es bekannt, Polyurethan durch chemische Verfahren zu spalten und diese Spaltprodukte wieder zur Herstellung von Polyurethanen einzusetzen.

Eine Möglichkeit ist die Spaltung der Polyurethane durch Einwirkung von mehrwertigen Alkoholen, die sogenannte Glykolyse. Dieser Prozeß ist bereits in einer Reihe von Patenten beschrieben, beispielhaft genannt seien an dieser Stelle DE-A-2 516 863, DE-A-2 557 172, DE-C-3 702 495, US-A-3 109 824, US-A 3 404 103 und DE-A-4 234 335.

Bei den genannten Glykolyseverfahren entstehen auch, bedingt durch den Wassergehalt des Alkohols und die Restfeuchte der eingesetzten Polyurethane, die den Isocyanaten zugrunde liegenden Amine. Aromatische Amine sind jedoch als Krebserzeuger verdächtig und müssen daher aus dem Reaktionsgemisch entfernt werden.

In EP-A-592 952 wird ein Glykolyseverfahren beschrieben, bei dem die bei der Glykolyse entstehenden aromatischen Amine mit Glycidethern umgesetzt und damit unschädlich gemacht werden.

Bei der Glykclyse von PUR-HS entstehen Glykolysepolyole, die neben einem Gehalt an aromatischen Aminen, insbesondere Diphenylmethandiamin (MDA) und seinen höheren Homologen, auch hohe Säurezahlen, über 2 mg KOH/g, aufweisen. Bei dem aus EP-A-592 952 bekannten Entaminierungsverfahren gelingt es nicht, die Säurezahl dieser Recyclatpolyole zu senken.

Der Erfindung lag daher die Aufgabe zugrunde, ein einfaches und wirtschaftliches Verfahren zur Glykolyse von PUR-HS zu entwikkeln, das ohne die Verwendung giftiger oder sonstiger gefährlicher Stoffe zu einem Recyclatpolyol führt, das sofort als solches zur Polyurethanherstellung verwendet werden kann, einem Gehalt an MDA von deutlich unter dem Kennzeichnungswert von 0,1 Gew.-% und eine Säurezahl von unter 1 mg KOH/g aufweist und dessen Viskosität den Wert von 5.000 mPas bei 25°C nicht überschreitet.

Die Aufgabe wurde erfindungsgemäß gelöst durch ein Verfahren zur Herstellung von Recylcatpolyolen durch Umsetzung von PUR-HS mit Ethylenglykol, Diethylenglykol, Propylenglykol und/oder Di-propylenglykol, dadurch gekennzeichnet, daß dem Reaktionsgemisch nach der Umsetzung mindestens ein epoxidiertes natives fettes Öl zugesetzt wird.

Gegenstand der Erfindung ist demzufolge ein Verfahren zur Herstellung von Recyclatpolyolen durch Umsetzung von PUR-HS mit Ethylenglykol, Diethylenglykol, Propylenglykol und/oder Di-propylenglykol, dadurch gekennzeichnet, daß das Reaktionsgemisch nach der Glykolyse 10 bis 60 Minuten bei einer Temperatur, die 10 bis 80°C unter der Glykolysetemperatur liegt, gehalten und während dieser Zeit 1 bis 15 Gew.-%, bezogen auf die Summe von Polyurethan-Hartschaum und Ethylenglykol, Diethylenglykol, Propylenglykol und/oder Dipropylenglykol, mindestens eines epoxidierten nativen fetten Öls zugesetzt wird.

Gegenstand der Erfindung sind weiterhin die nach diesem Verfahren hergestellten Recyclatpolyole sowie ihre Verwendung zur Herstellung von Polyurethanen.

Zur Durchführung des erfindungsgemäßen Verfahrens wird der PUR-HS, zumeist in zerkleinerter Form, mit den Glykolen vermischt. Die Zerkleinerung des PU-HS kann beispielsweise durch mahlen, schneiden oder brechen erfolgen.

Um eine gute Homogenisierung der Reaktionsmischung zu erreichen, ist es vorteilhaft, das Glykol im Reaktionsgefäß vorzulegen und auf eine zur Lösung des PUR-HS ausreichende Temperatur zu erwärmen. Im allgemeinen erfolgt die Zugabe des PUR-HS bei einer Temperatur T₁ von 190 bis 240°C, bevorzugt von 200 bis 230°C. Die Menge des zugesetzten PUR-HS wird nach oben vom Lösevermögen des PUR-HS in der kurzkettigen, Hydroxylgruppen enthaltenden Verbindung begrenzt. Diese Höchstmenge an PUR-HS kann durch einfache Vorversuche leicht bestimmt werden.

Im allgemeinen wird mit einem Mengenverhältnis PUR-HS zu Glykol von 0,3-1,8:1 gearbeitet. Bei höheren PUR-HS-Gehalten steigt die Viskosität der Glykolysepolyole zumeist stark an.

Nach der vollständigen Homogenisierung des Reaktionsansatzes wird dieser auf die Reaktionstemperatur der Glykolyse gebracht. Diese liegt im allgemeinen unterhalb der Zugabetemperatur. Üblich sind Glykolysetemperaturen T2 zwischen 180 bis 210°C, vorzugsweise von 190 bis 200°C. Es ist vorteilhaft, die Glykolysetemperatur so zu wählen, daß sie mindestens 15 Grad unter der Temperatur bei Zugabe der PUR-HS zur Hydroxylgruppen enthaltenden Verbindung liegt, um Nebenreaktionen zu unterdrücken. Diese Temperatur wird bis zur vollständigen Umsetzung des PUR-HS mit dem Glykol, erkennbar an der Einstellung einer konstanten Viskosität, beibehalten. Bei den in der Praxis üblichen Ansatzverhältnissen beträgt die Reaktionszeit 120 bis 240 Minuten.

Nach Abschluß der Reaktion wird die Reaktionsmischung auf eine Temperatur T₃ von 130 bis 180°C abgekühlt und 10 bis 60 Minuten gehalten. Während dieser Zeit wird das epoxidierte native fette Öl zugegeben. Bei einer höheren Zugabetemperatur kommt es zu Nebenreaktionen des epoxidierten nativen fetten Öls; bei einer niedrigeren Zugabetemperatur ist die Reaktionsgeschwindigkeit der Umsetzung zu niedrig. Danach wird das Reaktionsgemisch abgekühlt.

Gegebenenfalls kann sich daran noch eine Aufarbeitung des Recyclatpolyols anschließen, beispielsweise durch Filtration.

Als PUR-HS können Abfälle verwendet werden, beispielsweise aus dem Bauwesen, insbesondere jedoch aus verschrotteten Kühlmöbeln. Bei der Rückführung und Verschrottung von Kühlmöbeln fallen große Mengen an PUR-HS an. Aufgrund ihrer geringen Verschmutzung und ihrer homogenen Zusammensetzung sind derartige Abfälle für eine Glykolyse gut geeignet.

Vor der Glykolyse ist es zur Erreichung einer besseren Handhabbarkeit und zur Verringerung des Volumens vorteilhaft, die Abfälle zu kompaktieren und bei Polyurethanschaumstoffen die eventuell noch vorhandenen Treibgase zu entfernen.

Erfindungsgemäß eingesetzt werden Ethylenglykol, Diethylenglykol, Propylenglykol und Dipropylenglykol, einzeln oder im Gemisch untereinander.

Mit diesen Glykolen kann ein Glykolysepolyol mit besonders günstigen Eigenschaften, insbesondere in Bezug auf Reaktivität und Viskosität, erhalten werden.

Als epoxidierte native fette Öle werden solche Produkte eingesetzt, die aus mindestens einfach, vorzugsweise mindestens dreifach ungesättigten natürlichen Ölen gewonnen werden, z.B. aus Soja, Lein, Raps und Nüssen aller Art. Unter "ungesättigt" ist hierbei eine Kohlenstoff-Kohlenstoff-Doppelbindung zu verstehen.

Die epoxidierten nativen fetten Öle werden in einer Menge von 1 bis 15 Gew.-%, vorzugsweise von 2 bis 10 Gew.-%, der Reaktionsmischung zugesetzt.

Die nach diesem Verfahren hergestellte Glykolysepolyole zeichnen sich durch niedrige Amingehalte und niedrige Säurezahlen aus. Sie können ohne zusätzliche Behandlung wieder zu Polyurethanen verarbeitet werden. Aufgrund ihrer hohen Funktionalität werden sie zumeist wieder zu Polyurethan-Hartschäumen verarbeitet.

Dazu werden sie allein, vorzugsweise jedoch im Gemisch mit anderen Hydroxylgruppen enthaltenden Verbindungen, in Gegenwart von üblichen Treibmitteln, Katalysatoren, Hilfsmitteln und Zusatzstoffen mit Polyisocyanaten umgesetzt.

Da die erfindungsgemäßen Glykolysepolyole sehr niedrige Viskositäten aufweisen, können sie auch vorteilhaft für FCKW-freie Hartschaumsysteme eingesetzt werden.

Die Erfindung soll an nachstehenden Beispielen näher erläutert werden:

### Beispiele 1 bis 7 (erfindungsgemäß)

In einem mit Rührer, Tropftrichter, Thermometer und Rückflußkühler ausgerüsteten 2-1-Rundkolben wurde Diethylenglykol vorgelegt und auf die Temperatur T₁ aufgeheizt. Nach Erreichen dieser Temperatur wurde mittels einer Schneidmühle vorzerkleinertes PUR-HS unbekannter Zusammensetzung aus verschrotteten Kühlmöbeln unter Rühren in den Kolben eingefüllt. Nach Auflösen des PUR-HS im Diethylenglykol wurde die Reaktionsmischung auf die Temperatur T₂ gebracht und dort gehalten.

Danach wurde die Temperatur auf 150°C gesenkt und 30 Minuten gehalten und in dieser Zeit das epoxidierte native fette Öl zugesetzt.

Nach Abschluß der Zugabe wurde das Reaktionsgemisch auf Raumtemperatur abgekühlt und das erhaltene Glykolysepolyol analysiert.

Die genauen Mengen, Temperaturen, Zeiten sowie die Analyseergebnisse sind der Tabelle zu entnehmen.

Die Bestimmungen der Hydroxylzahl erfolgte nach DIN 53 240, die der Viskosität bei 25°C nach DIN 53 214, die der Säurezahl nach DIN 53 402 sowie die des Gehaltes an aromatischen Aminen, berechnet als MDA, mittels HPLC.

### Beispiel 8 (Vergleich)

Es wurde verfahren wie in den Beispielen 1 bis 7, allerdings wurde dem Reaktionsgemisch kein natives fettes Öl zugesetzt und das Reaktionsgemisch nicht für 30 Minuten auf 150°C gehalten.

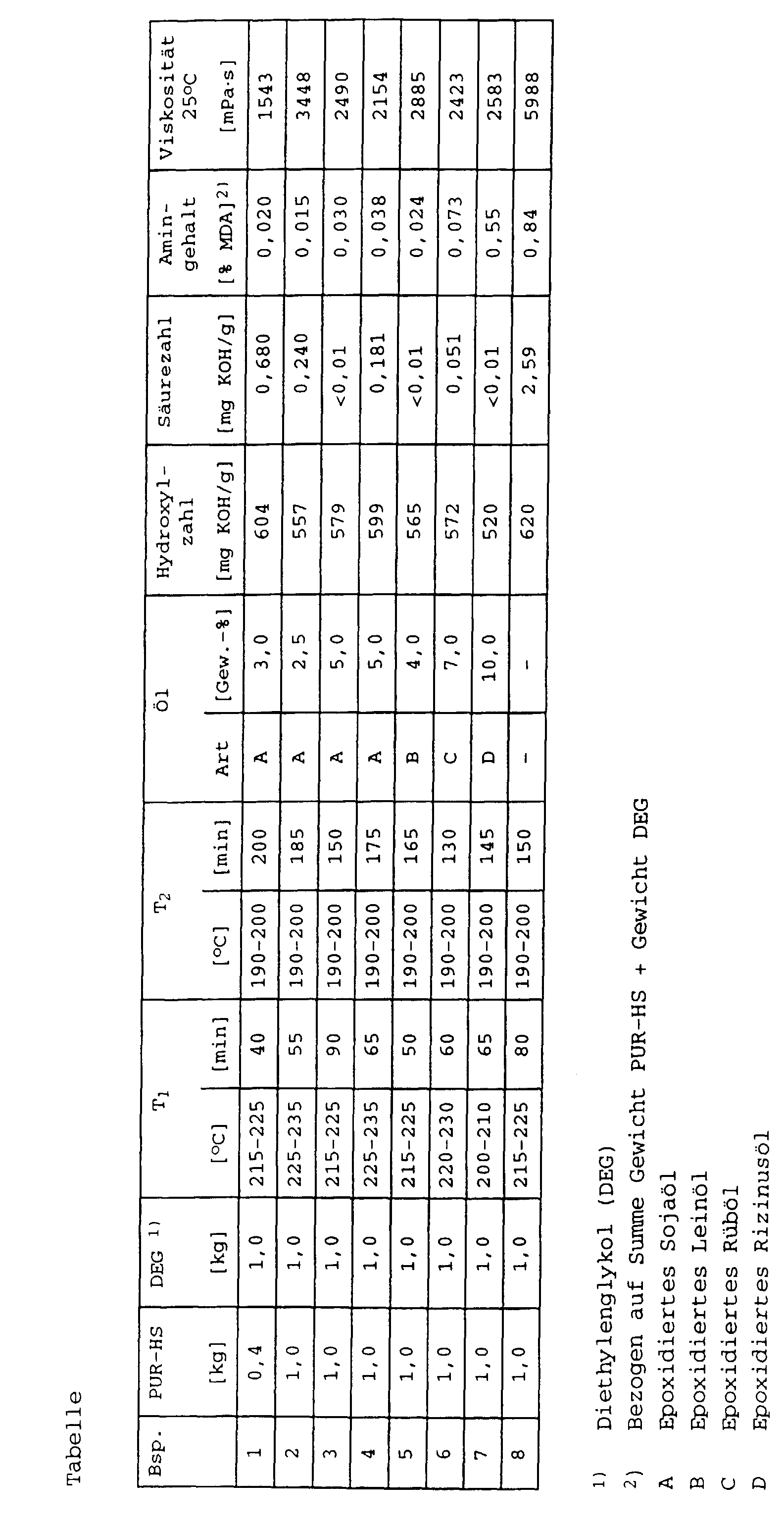

## Patentansprüche

1. Verfahren zur Herstellung von Recyclatpolyolen durch Umsetzung Polyurethan-Hartschaum mit Ethylenglykol, Diethylenglykol, Propylenglykol und/oder Dipropylenglykol, dadurch gekennzeichnet, daß das Reaktionsgemisch nach der Glykolyse 10 bis 60 Minuten bei einer Temperatur, die 10 bis 80°C unter der Glykolysetemperatur liegt, gehalten und während dieser Zeit 1 bis 15 Gew.-%, bezogen auf die Summe des Gewichts von Polyurethan-Hartschaum und Ethylenglykol, Diethylenglykol, Propylenglykol und/oder Dipropylenglykol, mindestens eines epoxidierten nativen fetten Öls zugesetzt wird.

2. Verfahren nach Anspruch 1, dadurch gekennzeichnet, daß die Glykolyse bei 180 bis 210°C und der Zusatz des epoxidierten nativen fetten Öls bei 130 bis 180°C vorgenommen wird.

3. Verfahren nach Anspruch 1 oder 2, dadurch gekennzeichnet, daß die Glykolyse bei 190 bis 200°C und der Zusatz des epoxidierten nativen fetten Öls bei 140 bis 160°C vorgenommen wird.

4. Verfahren nach einem der Ansprüche 1 bis 3, dadurch gekennzeichnet, daß das epoxidierte native fette Öl ausgewählt ist aus der Gruppe, enthaltend epoxidiertes Rüböl, epoxidiertes Rizinusöl, epoxidierte Öle von Nüssen.

5. Verfahren nach einem der Ansprüche 1 bis 4, dadurch gekennzeichnet, daß das epoxidierte native fette Öl in einer Menge von 2 bis 10 Gew.-%, bezogen auf die Summe des Gewichts von Polyurethan-Hartschaum und kurzkettiger, Hydroxylgruppen enthaltender Verbindungen, zugesetzt wird.

6. Recyclatpolyol, hergestellt nach einem der Ansprüche 1 bis 5.

7. Verwendung von Recyclatpolyolen nach Anspruch 6 zur Herstellung von Polyurethanen.

8. Verwendung von Recyclatpolyolen nach Anspruch 6 zur Herstellung von Polyurethan-Hartschaumstoffen.

## Claims

1. A process for the preparation of recyclate polyols by reacting rigid polyurethane foam with ethylene glycol, diethylene glycol, propylene glycol and/or dipropylene glycol, which comprises maintaining the reaction mixture after glycolysis at a temperature from 10 to 80°C below the glycolysis temperature for from 10 to 60 minutes, and, during this time, adding from 1 to 15% by weight, based on the total weight of rigid polyurethane foam and ethylene glycol, diethylene glycol, propylene glycol and/or dipropylene glycol, of at least one epoxidized native fatty oil.

2. A process as claimed in claim 1, wherein the glycolysis is carried out at from 180 to 210°C and the addition of the epoxidized native fatty oil is carried out at from 130 to 180°C.

3. A process as claimed in claim 1 or 2, wherein the glycolysis is carried out at from 190 to 200°C and the addition of the epoxidized native fatty oil is carried out at from 140 to 160°C.

4. A process as claimed in any of claims 1 to 3, wherein the epoxidized native fatty oil is selected from the group consisting of epoxidized rapeseed oil, epoxidized castor oil and epoxidized nut oils.

5. A process as claimed in any of claims 1 to 4, wherein the epoxidized native fatty oil is added in an amount of from 2 to 10% by weight, based on the total weight of rigid polyurethane foam and short-chain hydroxyl-containing compounds.

6. A recyclate polyol prepared as claimed in any of claims 1 to 5.

7. The use of a recyclate polyol as claimed in claim 6 for the preparation of polyurethanes.

8. The use of a recyclate polyol as claimed in claim 6 for the preparation of rigid polyurethane foams.

## Revendications

1. Procédé pour la préparation de polyols sous forme de produits de recyclage par mise en réaction d'une mousse dure de polyuréthane avec de l'éthylèneglycol, du diéthylèneglycol, du propylèneglycol et/ou du dipropylèneglycol, caractérisé en ce qu'on maintient le mélange réactionnel après la glycolyse pendant un laps de temps de 10 à 60 minutes à une température qui est inférieure de 10 à 80°C à la température de la glycolyse et, pendant ce laps de temps, on ajoute, à concurrence de 1 à 15% en poids, rapportés au poids total de la mousse dure de polyuréthane et de l'éthylèneglycol, du diéthylèneglycol, du propylèneglycol et/ou du dipropylèneglycol, au moins une huile grasse naturelle époxydée.

2. Procédé selon la revendication 1, caractérisé en ce qu'on procède à la glycolyse à une température de 180 à 210°C et on procède à l'addition de l'huile grasse naturelle époxydée à une température de 130 à 180°C.

3. Procédé selon la revendication 1 ou 2, caractérisé en ce qu'on procède à la glycolyse à une température de 190 à 200°C et on procède à l'addition de l'huile grasse naturelle époxydée à une température de 140 à 160°C.

4. Procédé selon l'une quelconque des revendications 1 à 3, caractérisé en ce que l'huile grasse naturelle époxydée est choisie parmi le groupe contenant de l'huile de navette époxydée, de l'huile de ricin époxydée, des huiles de noix époxydées.

5. Procédé selon l'une quelconque des revendications 1 à 4, caractérisé en ce qu'on ajoute l'huile grasse naturelle époxydée en une quantité de 2 à 10% en poids rapportés au poids total de la mousse dure de polyuréthane et des composés à courtes chaînes contenant des groupes hydroxyle.

6. Polyol sous forme de produit de recyclage préparé conformément à une des revendications 1 à 5.

7. Utilisation de polyols sous forme de produits de recyclage selon la revendication 6 pour la préparation de polyuréthanes.

8. Utilisation de polyols sous forme de produits de recyclage selon la revendication 6 pour la préparation de mousses dures de polyuréthanes.
